Europäisches Patentamt

European Patent Office

Office européen des brevets

(11) Publication number: **0 176 133 B1**

# EUROPEAN PATENT SPECIFICATION

(45) Date of publication of patent specification: **24.05.89**

(51) Int. Cl.⁴: **C 08 F 297/08**

(21) Application number: **85201435.6**

(22) Date of filing: **10.09.85**

(54) **A process for the sequential polymerization of ethylene and propylene.**

(30) Priority: **25.09.84 GB 8424180**

(43) Date of publication of application:
**02.04.86 Bulletin 86/14**

(45) Publication of the grant of the patent:
**24.05.89 Bulletin 89/21**

(84) Designated Contracting States:
**FR GB NL**

(56) References cited:
**EP-A-0 059 865**
**GB-A-2 094 319**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Mewing, Steven Francis**
**Carel van Bylandtlaan 30**
**NL-2596 HR The Hague (NL)**

(74) Representative: **Aalbers, Onno et al**
**P.O. Box 302**
**NL-2501 CH The Hague (NL)**

Courier Press, Leamington Spa, England.

## Description

The present invention is concerned with a continuous process for producing high impact polypropylenes by first homopolymerizing propylene and then copolymerizing ethylene and propylene.

The major problem encountered in such continuous sequential polymerization has been discussed in USP 4,380,608. As a result of inhomogeneous residence time in the homopolymerization reactor, the homopolymer particles transferred to the copolymerization reactor have a very wide weight distribution; i.e. there are on the one hand catalyst particles that have produced relatively little polymer and on the other catalyst particles that have produced relatively much polymer. In the following copolymerization reactor the former will form product particles which, in relation to homopolymer constituent, contain a relatively high proportion of copolymer. Upon processing the product particles, that contain too much of rubbery copolymer, do not properly disperse in the main product phase. The poorly dispersed particles may be referred to as "gels", they give rise to a rough surface appearance of film and moulded articles, or to fish-eyes in blown film and loss of impact strength of moulded articles.

The relevant problem associated with irregular copolymer distribution in the total product is aggravated when employing advanced high activity magnesium chloride supported titanium catalysts of the type described in British Pat. Spec. 1,559,194. These catalysts comprise magnesium chloride, a titanium compound, normally titaniumtetrachloride, and an electron donor which is usually an aromatic ester, e.g. ethylbenzoate. They are employed in conjunction with cocatalysts comprising an aluminiumalkyl compound, e.g. triethylaluminium, and an aromatic ester such as p - methoxyethylbenzoate or methyl p.toluate. It is well known that such catalysts lose their polymerization activity in a fairly short period of time, this loss of activity has been referred to as "decay". So, the relevant catalysts have a high decay-rate, c.f. L. Luciani, Angew. Makramol. Chemie, *94*, (1981), p 63—89, Figure 14 and 15. This phenomenon can have more pronounced effects in the option of bulk polymerization in liquid monomer than in the option of polymerization in an inert hydrocarbon diluent such as hexane or iso-octane.

The teaching of USP 4,380,608 is to solve the discussed problem of undesirable formation of gels by chemical modification of the co-catalyst used in the copolymerization step. This modification comprises the addition of an aluminium trichloride or an aluminiumalkylhalide component to the co-catalyst. This complicates the copolymerization process technology since sophisticated dosing and control equipment is required to ensure a constant ratio of modifying component to co-catalyst in the copolymerization reactor.

The present invention solves the relevant problem in a more elegant, less complicated way by employing novel process-design considerations.

The invention provides a continuous process for sequential polymerization of ethylene and propylene by first homopolymerizing propylene in a liquid medium comprising propylene monomer as major constituent and in the presence of a magnesiumchloride and titanium containing catalyst and then copolymerizing ethylene and propylene in the presence of a liquid medium, each of these reactions being effected in a stirred tank reactor, characterized in that the homopolymer slurry is transferred from the homopolymerization reactor to the copolymerization reactor through a pipe line reactor in which the residence time of the homopolymer slurry is at least 2.5 min, preferably at least 7 min.

In the stirred tank reactors the polymerization system has an average residence time that will normally vary inbetween 30 and 240 min, preferably 45 and 100 min. A typical feature of stirred tank reactors is that the residence time distribution shows a wide spectrum. On the other hand, it is a typical feature of a pipe line reactor that the residence time distribution shows a very narrow spectrum, if any at all. In this inventiona pipe line reactor is understood to mean any reactor of which the ratio of length to internal diameter is at least 25:1, preferably this ratio is at least 150:1. An increase in the average residence time in the pipe line reactor may be brought about by reducing the transfer speed of the polymer slurry in the pipe line or by increasing the length thereof. Thus it is included within the scope of this invention to employ pipe lines having a total length of 750 to 1500 m and an internal diameter of 0.05 to 0.2 m. Shorter pipe line reactors, e.g. having a length of 150 to 750 m may also be applied. The residence time in the pipe line will generally be kept below 25 min.

The pipe line reactor ensures that, as a result of continued polymerization, every catalyst particle is provided with a certain minimum amount of propylene homopolymer, thus avoiding the formation of total product particles which do not contain homopolymer above a certain minimum amount. This significantly promotes easy dispersion of rubbery copolymer phase into the homopolymer phase and films and moulded articles produced from the products of this invention do not show the disadvantages of the prior art copolymers produced by sequential polymerization.

The pipe line reactor and the stirred tank reactors may be provided with internal or external means to ensure adequate removal of the heat of polymerization. The homopolymerization in the tank reactor and in the pipe line reactor will normally be effected at temperatures of from 55 to 80°C, there may be a temperature drop of about 5 to 10°C in the pipe line reactor.

Typically, the temperature employed in the pipe line reactor will be effected in the same range as that in the homopolymerization reactor. Copolymerization will normally be effected at slightly lower temperatures with 40 to 70°C being preferred.

Preferred operating conditions are those which yield an ethylene content in the copolymer product phase of 50 to 70, preferably 55 to 65 %wt (calculated on the weight of the copolymer phase) and production of copolymer in a proportion by weight of from 12 to 25, preferably 14 to 22 %wt, calculated on the weight of the total product. The melt index of the total product can be varied inbetween 0.2 and 15.0 dg/min, preferred melt indices are those of from 0.8 to 7.5 dg/min. By varying the amount of hydrogen employed in the various reactors adequate control of molecular weight is easily achieved, it is preferred to employ ratios of copolymer molecular weight over homopolymer molecular weight (determined as intrinsic viscosity in decaline, 135°C, dl/g) of from 0.8:1 to 2.5:1, preferably of from 1:1 to 2:1. The average residence time in the copolymerization reactor will as a rule be within the range of from 10 to 150 min, preferably in between 30 and 80 min.

Both the homopolymerization and the copolymerization proceed under the formation of a slurry of polymer particles in a liquid diluent, being substantially propylene monomer in the first reactor and a mixture of ethylene and propylene in the copolymerization reactor. In each of the reactors a minor amount of a low boiling inert hydrocarbon may be present, e.g. propane, butane or isobutane. The magnesiumchloride and titanium compound containing catalysts offer the advantage that it is not necessary to remove catalyst remnants and amorphous, non-isotactic polymer from the final product which is withdrawn from the copolymerization reactor.

Suitable catalysts may be chosen from the prior art, e.g. GB—A—1,559,194, 1,536,358, 1,576,642, 1,603,724, 2,029,480, EP—A—19,312 and 19,330. Preferred catalysts are those having a decay constant as defined by Luciani in Angew. Makromol. Chemie, *94* (1981) p. 85 of from 1.5 to $7.5 \cdot 10^{-2} \cdot min^{-1}$, determined at 67°C, propylene bulk homopolymerization. In such preferred catalyst systems aromatic esters, e.g. p.ethoxyethylbenzoate, methyl-p.toluate or p.methoxyethylbenzoate are employed as selectivity control agents or as compounds used for complexing the organo - aluminium co-catalyst. Preferred solid catalyst components are those obtained by employing the catalyst modification procedures disclosed in EP—A—19,312, 19,330 or 29,623 to solid reaction products produced by halogenating a mixture of aromatic ester, e.g. ethylbenzoate, and magnesiumdialkoxide or magnesiumalkoxyhalide with titaniumtetrachloride. Another modification of the relevant solid catalyst components is possible by reacting with an acid halide, e.g. benzoylchloride.

In conventional block polymerization methods to produce propylene homopolymer-ethylene/propylene copolymer products, it is essential that means are provided to prevent back-flow of ethylene monomer into the homopolymerization reactor. No such back-flow is possible with the process of this invention because of the presence of the pipe line reactor linking the homopolymerization reactor with the copolymerization reactor. The absence of special means to prevent back-flow of ethylene is a significant advantage inherent to the simplified process design of the method of this invention.

Another important advantage is that there is no strict need to conceive additional equipment for introducing solid catalyst component or co-catalyst into the copolymerization reactor, in the invention catalyst components are only supplied to the homopolymerization reactor. From there on the same catalyst remains in its gradually decaying form in the polymerization system which is transferred through to the pipe line reactor and further processed in the copolymerization reactor. In this respect the method of this invention is once again of a very simple character.

Example

Sequential polymerization of propylene and ethylene was continuously effected in a stirred tank homopolymerization reactor (temperature 67°C, pressure 3000 kPa, catalyst concentration 0.01 mmol Ti/l, Al/Ti ratio 70:1, triethylaluminium/p.ethoxyethylbenzoate ratio 1.3:1, average residence time 100 min, polymer slurry concentration 320 g/l propylene liquid phase, homopolymer yield 20 kg/g cat, hydrogen concentration variable), then in a pipe line reactor (internal diameter of 0.075 m, length 925 m, residence time 9 min, temperature drop 8°C, pressure drop 500 kPa) and lastly, in a stirred tank copolymerization reactor, (temperature 50°C, pressure 3000 kPa, average residence time 50 min, polymer slurry concentration 480 g/l, total product yield 24 kg/g cat, ethylene/propylene mol ratio in liquid phase 0.1:1, hydrogen concentration variable). A single slurry pump, installed at the exit of the homopolymerization reactor, ensured transfer of polymer slurry through the pipeline and copolymerization reactor.

A solid catalyst component was employed which had been produced by reacting a mixture of magnesium diethoxide and ethylbenzoate with a 50/50 vol mixture of chlorobenzene and titaniumtetrachloride, followed by contacting the solid reaction product with a mixture of benzoylchloride and titaniumtetrachloride for 30 min at 110°C, and thoroughly washing the solid with isopentane at ambient temperature. Three separate feed lines were used to introduce the catalyst system into the homopolymerization reactor: one for the solid catalyst component, one for triethylaluminium and the third one for p.ethoxyethylbenzoate.

By varying the hydrogen distribution over the homo- and copolymerization reactor the following products were obtained without applying any polymer purification treatment other than the removal of unconverted ethylene and propylene monomer by evaporating.

3

| Grade | Melt index dg/min | FWIS[1] joules | FLEX[2] MN · m$^{-2}$ | Fc[3] %wt | Et[4] %wt | MW[5] ratio | XS[6] % |
|---|---|---|---|---|---|---|---|
| 1 | 0.6—1.2 | 12 | 1050 | 20 | 12 | 1.5 | 4 |
| 2 | 2.0—4.0 | 9 | 1045 | 20 | 12 | 1.5 | 4 |
| 3 | 5.6—12 | 6 | 1055 | 20 | 12 | 1.5 | 4 |

[1]Falling Weight Impact Strength
[2]Flexural Modulus, ASTM D790-B
[3]Fraction $C_2/C_3$ copolymer in total product
[4]Ethylene content of total product
[5]Molecular weight ratio of $C_2/C_3$ copol. phase to $C_3$ homopol. phase I.V. decaline, 135°C
[6]Xylene solubles, %wt of total product that remains soluble when cooling to ambient temperature a polypropylene solution made by dissolving polymer in boiling xylene.

FWIS is determined in accordance with a test procedure based on British Standard 2782 (1970) method 306, procedure B, but in which the apparatus is modified to comprise a specimen support ring with an inner, respectively outer diameter of 41.5, respectively 47.5 mm. This modified apparatus is available from CEAST S.p.A., Torino, Italy. Injection moulded test specimen are employed, 50×50×1.6 mm.

## Claims

1. A continuous process for sequential polymerization of ethylene and propylene by first homopolymerizing propylene in a liquid medium comprising propylene monomer as major constituent and in the presence of a magnesiumchloride and titanium containing catalyst and then copolymerizing ethylene and propylene in the presence of a liquid medium, each of these reactions being effected in a stirred tank reactor, characterized in that the homopolymer slurry is transferred from the homopolymerization reactor to the copolymerization reactor through a pipe line reactor in which the residence time of the homopolymer slurry is at least 2.5 min.
2. A process as claimed in claim 1, in which the residence time is at least 7 min.
3. A process as claimed in claim 1 or 2, in which a catalyst is employed which comprises a solid a catalyst component formed by halogenating a mixture of an aromatic ester and magnesium dialkoxide or magnesiumalkoxyhalide with titaniumtetrachloride.
4. A process as claimed in any of claims 1—3, in which a catalyst having a decay constant of from 1.5 to $7.5 \cdot 10^{-2}/\text{min}^{-1}$ is employed.

## Patentansprüche

1. Ein kontinuierliches Verfahren zur Herstellung von Blockcopolymerisaten aus Äthylen und Propylen erstens durch Homopolymerisation von Propylen in einem flüssigen Medium, das monomeres Propylen als Hauptbestandteil enthält, in Gegenwart eines magnesiumchlorid- und titanhaltigen Katalysators und danach durch Copolymerisation von Äthylen und Propylen in Gegenwart eines flüssigen Mediums, wobei jede dieser Reaktionen in einem Rührkesselreaktor abläuft, dadurch gekennzeichnet, daß die Homopolymerisat - Trübe vom Homopolymerisationsreaktor in den Copolymerisationsreaktor durch einen Rohrreaktor geführt wird, in dem die Verweilzeit der Homopolymerisat - Trübe mindestens 2,5 Minuten beträgt.
2. Ein Verfahren nach Anspruch 1, bei dem die Verweilzeit mindestens 7 Minuten beträgt.
3. Ein Verfahren nach Anspruch 1 oder 2, bei dem ein Katalysator verwendet wird, der aus einem festen Katalysatorbestandteil besteht, der durch Halogenierung eines Gemisches aus einem aromatischen Ester und Magnesiumdialkoxid oder aus einem Magnesiumalkoxyhalogenid und Titantetrachlorid gebildet wird.
4. Ein Verfahren nach einem der Ansprüche 1, 2 oder 3, bei dem ein Katalysator mit einer Zerfallskonstante von 1,5 bis 7,5×10$^{-2}$/min$^{-1}$ verwendet wird.

## Revendications

1. Un procédé continu pour la polymérisation séquentielle d'éthylène et de propylène en homopolymérisant d'abord du propylène dans un milieu liquide comprenant du monomère propylène comme constituant majeur et en présence d'un catalyseur contenant du chlorure de magnésium et du titane et en copolymèrisant ensuite de l'éthylène et du propylène en présence d'un milieu liquide, chacune de ces réactions étant effectuée dans un réacteur à cuve agitée, caractérisé en ce que la bouillie d'homopolymère est transférée du réacteur d'homopolymérisation au réacteur de copolymérisation par un réacteur du type pipeline dans lequel le temps de séjour de la bouillie d'homopolymère est d'au moins 2,5 minutes.

2. Un procédé selon la revendication 1, dans lequel le temps de séjour est d'au moins 7 minutes.

3. Un procédé selon la revendication 1 ou 2, dans lequel on utilise un constituant de catalyseur solide formé en halogénant un mélange d'un ester aromatique et d'un dialcoolate de magnésium ou d'un alcoxyhalogénure de magnésium avec du tétrachlorure de titane.

4. Un procédé selon l'une quelconque des revendications 1—3, dans lequel on utilise un catalyseur ayant une constante d'affaiblissement comprise entre 1,5 et $7,5 \cdot 10^{-2}/\min^{-1}$.